Europäisches Patentamt

European Patent Office

Office européen des brevets

(11) Veröffentlichungsnummer: **0 312 496**
B1

# EUROPÄISCHE PATENTSCHRIFT

(45) Veröffentlichungstag der Patentschrift:
10.10.90

(21) Anmeldenummer: 88810689.5

(22) Anmeldetag: 06.10.88

(51) Int. Cl.⁵: **B60J 1/00**, B60R 13/06

(54) **Fahrzeugscheibe für die Direktverglasung, Verfahren zu deren Herstellung und Verwendung der Fahrzeugscheibe als montagefertiges Bauteil.**

(30) Priorität: 14.10.87 CH 4026/87
20.04.88 CH 1497/88

(43) Veröffentlichungstag der Anmeldung:
19.04.89 Patentblatt 89/16

(45) Bekanntmachung des Hinweises auf die Patenterteilung:
10.10.90 Patentblatt 90/41

(84) Benannte Vertragsstaaten:
AT BE CH DE ES FR GB GR IT LI LU NL SE

(56) Entgegenhaltungen:
EP-A- 0 073 350
EP-A- 0 109 659
EP-A- 0 121 479
EP-A- 0 128 837
DE-A- 3 305 257
DE-A- 3 323 006
DE-A- 3 409 960
DE-A- 3 435 365
GB-A- 1 014 478
GB-A- 1 210 288
GB-A- 2 125 473
US-A- 3 434 903
US-A- 3 968 612

(73) Patentinhaber: **Gurit-Essex AG,
CH-8807 Freienbach(CH)**

(72) Erfinder: **Braendle, Jürg G., Seestrasse 83,
CH-8806 Bäch(CH)**
Erfinder: **Saur, Wolfgang, Tafletenstrasse 5,
CH-8863 Buttikon(CH)**

(74) Vertreter: **Rottmann, Maximilian R., c/o Rottmann,
Maspoli + Zimmermann AG Glattalstrasse 37,
CH-8052 Zürich(CH)**

## Beschreibung

Die vorliegende Erfindung bezieht sich auf eine Fahrzeugscheibe nach dem Oberbegriff des Patentanspruches 1, auf ein Verfahren zu deren Herstellung und auf eine Verwendung dieser Fahrzeugscheibe als montagefertiges Bauteil nach dem Patentanspruch 24.

Gegenüber der konventionellen Verglasungstechnik, bei welcher ein Doppel-U-Profil aus Gummi oder einem ähnlich elastischen Material Verwendung findet, das einerseits die Scheibenkante und andererseits eine Rahmenkante, einen Flansch an einer Fahrzeugkarosserie oder dgl. formschlüssig umfasst und dabei die Scheibe in der vorgesehenen Montageposition hält, findet zunehmend die sogenannte Direktverglasung Anwendung, bei der die Scheibe in den Rahmen, an einen Flansch einer Karosserie oder dgl. angeklebt wird. Die bekannten, dabei zur Anwendung kommenden Verfahren lassen sich generell in drei Klassen einteilen:

1. Verfahren, in denen die Scheibe entlang ihres Randes, wo sie eingeklebt werden soll, gegebenenfalls mit einer UV- und lichtundurchlässigen Schicht und gegebenenfalls mit einem Primer beschichtet, sonst aber unvorbereitet angeliefert wird. Dabei wird der Montagekleber unmittelbar vor Ort aufgebracht und die Scheibe eingeklebt.

2. Verfahren, in denen die Scheibe in von der Montagestrasse getrennten Anlagen, ebenfalls wieder gegebenenfalls über einer oder mehreren Zwischenschichten, mit einem ersten Kleberstrang versehen wird, der dann ausreagiert wird. Dabei wird der eigentliche Montagekleber wiederum unmittelbar vor Ort aufgebracht.

3. Verfahren, in denen die Scheibe zeitlich und örtlich unabhängig vollständig zum Einkleben vorbereitet wird, indem die für die Verklebung erforderliche Kleberraupe, bestehend aus einem feuchtigkeitshärtenden Polyurethankleber, entlang des Randes der Scheibe aufgebracht und die Scheibe zur Zwischenlagerung bzw. zum Transport derart luftdicht in Folien verpackt wird, dass der aufgetragene Kleber nicht aushärten kann.

Die genannten Verfahren stellen aber noch keine optimale Lösung dar, da sie vor Ort, d.h. zum Beispiel an der Montagestrasse für ein Automobil, immer noch mehr oder weniger aufwendige Arbeiten erfordern: Aufbringen und gegebenenfalls Aktivieren der Verklebemasse mit allen Vor- und Zubereitungsmassnahmen dafür, oder allenfalls Entfernen einer grossflächigen und aufwendigen Verpackung der Scheiben unter Schonung der schon aufgebrachten Verklebemassen.

Die vorliegende Erfindung befasst sich im weitesten Sinne mit einer Verbesserung eines Verfahrens der 3. Klasse bzw. einer Scheibe, die für ein solches Verfahren geeignet ist.

Ein der vorgenannten 1. Klasse zuzuordnendes Verfahren ist z.B. aus der DE-OS 27 30 831 bekannt und braucht an dieser Stelle nicht näher diskutiert zu werden. Die Nachteile der Verfahren der vorgenannten 1. Klasse sind hinlänglich bekannt; hervorzuheben ist insbesondere die eventuell erforderliche, neuerliche Reinigung des mit der Klebemasse zu beschichtenden Randbereichs, das zeitaufwendige und mit grösster Präzision zu erfolgende Auftragen der Kleberraupe und die im allgemeinen kurze, vom Vorschubtakt des Montagebandes direkt abhängige Zeit, die zur Ausführung dieser Arbeiten zur Verfügung steht.

Gegenstand der DE-A 34 09 831 ist eine für die Direktverklebung geeignete Fahrzeugscheibe; diese Erfindung ist der zweiten der oben beschriebenen Klassen zuzuordnen.

Die zum Fahrgastraum hin gerichtete Glasscheibe zeigt eine kleinere Abmessung als die andere, nach aussen hin gerichtete Glasscheibe und bildet entlang dem Scheibenumfang eine stufenförmige Ausnehmung. Auf der Glasscheibe mit den grösseren Abmessungen entlang dem vorstehenden Rand ist ein rahmenartiger Streifen aus einem lichtundurchlässigen Material aufgebracht und auf diesem rahmenartigen Streifen ist ein, die stufenförmige Ausnehmung ausfüllender, ununterbrochener Strang aus einer, die Wasserdampfdiffusion verhindernden Klebedichtungsmasse angebracht. Dieser ist so bemessen, dass er bei Einbau der Windschutzscheibe in die Karosserie als Zwischenschicht für die Verklebung mit dem Befestigungsflansch der Karosserie dient.

Der Strang kann unmittelbar nach der Herstellung der Windschutzscheibe im Herstellwerk in die stufenförmige Ausnehmung der Windschutzscheibe eingebracht werden und sorgt auf diese Weise sofort nach der Herstellung der Windschutzscheibe für die Abdichtung der Zwischenschicht zur Atmosphäre hin.

Wenn der Strang über die innere Glasscheibe übersteht, erfüllt er gleichzeitig die Funktion eines Abstandhalters beim Aufeinanderstapeln der Glasscheiben.

Der Strang gemäss der DE-A 34 09 831 wird zweckmässigerweise mit einer Schutzfolie oder einem entsprechenden Schutzstreifen aus Papier abgedeckt, der erst unmittelbar vor der Montage der Windschutzscheibe in die Karosserie entfernt wird.

Die Verklebung der Windschutzscheibe mit dem Befestigungsflansch des Fensterrahmens kann auf verschiedene Weise erfolgen. Vorteilhafterweise wird vor dem Einsetzen der Windschutzscheibe auf den Strang eine mit diesem kompatible Montage-Kleberschicht bzw. ein Kleberstrang aufgebracht, so dass der ursprünglich aufgebrachte Strang gewissermassen als Zwischenkörper zwischen der Glasscheibe und der Kleberschicht zwischengeschaltet ist.

Auch das Verfahren gemäss der DE-A 34 09 960 betrifft das Einkleben von Fahrzeugscheiben in Karosserien mittels Einbringen des Verklebemittels an der Montagestrasse, gehört also zur zweiten der oben definierten Klassen. Gemäss dieser Schrift wird der Kleberstrang in Form von zwei miteinander kompatiblen Teilsträngen in zwei zeitlich getrennten Phasen aufgebracht, indem in der ersten Phase ein Teilstrang mit profiliertem Querschnitt, gegebenenfalls unter Zwischenschaltung einer oder mehrerer Haftvermittlerschichten, auf den Randbereich der Glasscheibe aufgebracht und ausgehärtet wird, so dass er in der zweiten Phase, im Zeitpunkt des Aufbringens des zweiten Teilstrangs, einen nicht mehr plastisch verformbaren Zwischenkörper zwischen der Glasscheibe und dem zweiten Teilstrang bildet.

Der erste Teilstrang wird mit Hilfe einer kalibrierten Düse so auf den Randbereich der Glasscheibe aufgebracht, dass der Teilstrang ein im wesentlichen L-förmiges oder ein im wesentlichen U-förmiges Querchnittsprofil mit einem an der der Sichtfläche der Glasscheibe zugewandten Seite angeordneten, auf den Befestigungsflansch des Fensterrahmens hin gerichteten Begrenzungssteg für den zweiten Teilstrang aufweist.

Während der auf der Glasscheibe angeordnete, erste Teilstrang bei der Montage der Glasscheibe bereits ausgehärtet ist, wird der zweite Teilstrang am Montageband unmittelbar vor dem Einbau der Glasscheibe auf den Basisteil des ersten Teilstrangs bzw. in den Kanal des ausgehärteten U-förmig profilierten Teil strangs hinein oder auf den Befestigungsflansch extrudiert. Beim Andrücken der Glasscheibe gegen den Befestigungsflansch füllt der frisch extrudierte zweite Teilstrang den Kanal des ersten Teilstrangs aus, wobei der innere Begrenzungssteg des ausgehärteten Teilstrangs verhindert, dass die noch weiche, frisch extrudierte Klebermasse des zweiten Teilstrangs seitlich, in Richtung auf das Sichtfeld der Glasscheibe hin, herausgedrückt wird.

Zwar lässt sich bei einem Vorgehen nach einer der beiden vorstehend diskutierten Schriften eine gewisse Vereinfachung bei der Auftragung des zweiten Kleberstranges, des eigentlichen Montageklebers, erzielen, doch sind die im Zusammenhang mit dem Vorgehen nach der Lehre der 1. Klasse erläuterten Nachteile in gewissem Masse nach wie vor vorhanden.

Als einzige der Anmelderin bekannte Veröffentlichung aus der dritten der oben definierten Klassen, d.h. der Verfahren mit externer vollständiger Vorbereitung der Fahrzeugscheibe zum Verkleben, wird hier die Studie der WKF, D-3180 Wolfsberg 1 vom Januar 1987 behandelt. Diese Studie basiert auf einem Patentgesuch der SIKA AG, Schweiz. Danach erfolgt der Auftrag eines unter Einfluss der Luftfeuchtigkeit härtenden Klebstoffes auf die Scheibe zeitlich und örtlich unabhängig von dem mit der Scheibe zu verklebenden Fahrzeug. Der Klebstoff wird dabei während oder sofort nach seinem Auftrag auf die Scheibe bis kurz vor dem vorgesehenen Einkleben der Scheibe in ein Fahrzeug durch eine Kombination von einer Überlagerung eines trockenen Schutzgases mit einem chemischen Trocknungsmittel und/oder einer physikalischen Trocknung vor jeglicher Feuchtigkeitseinwirkung geschützt.

Die mit dem Klebstoff versehene Scheibe wird dann in einer feuchtigkeitsfreien Umgebung in Eineroder Mehrereinheiten derart verpackt, dass beim späteren Transport und Lagern dieser Scheiben ein Feuchtigkeitszutritt zum Klebstoff ausgeschlossen ist.

Die Scheibe kann zwischen luftdichten Folien so eingeschweisst werden, dass die Folien vom Klebstoff einen lichten Abstand aufweisen; die in der Scheibenverpackung eingeschlossene Luft wird dann evakuiert, worauf die Scheibenverpackung mit Schutzgas gefüllt wird. Der Druck auf die Scheibe und den Kleber kann dann dem atmosphärischen Umgebungsdruck entsprechen, so dass sich auch weiche Teile der Verpackung nicht verformen.

Um das Anschmiegen der Folien zu verbessern, können die Folien beim Verpacken der Scheibe erwärmt werden. Die Folien können aber auch vor dem Einschweissen der Scheibe zumindest im Bereich des berührungsfrei abzudeckenden Klebstoffes verformt werden. Um ein verutschfreies Stapeln der verpackten Scheiben zu gewährleisten, können durch die Folienverformung Stapelnasen oder dergleichen gebildet werden. Es können dabei vakuumgeformte harte Folien Verwendung finden. Insbesondere bei Verwendung weicher Folien kann es zweckmässig sein, vor dem Verschweissen der Folien im Bereich der berührungsfreien Abdeckung des Klebstoffes Distanzstücke zwischen die Folien zu legen. Durch Distanzstücke lässt sich auch ein Verschieben der Scheibe innerhalb ihrer Verpackung verhindern.

Am Einbauplatz muss die noch verpackte Scheibe, gemäss der hier behandelten Studie, belüftet werden, so dass sich die Folie abziehen lässt. Um dies zu erleichtern, kann die Scheibenverpackung mit Mitteln zur späteren Belüftung der Verpackung versehen werden. Beispielsweise können geeignete Belüftungskanülen eingelegt werden. Die Belüftung kann unter Verdrängung des Schutzgases, z.B. mit hoher Luftfeuchtigkeit, durchgeführt werden. Lässt man vor dem Abziehen der Folie eine definierte Wartezeit verstreichen, lässt sich dadurch die Aushärtung des Klebstoffes schneller einleiten.

Wesentlich ist somit, dass die Scheibe örtlich und zeitlich vom Montageband, bzw. dem zu reparierenden Fahrzeug getrennt mit Cleanern, Primern und Klebstoff fertig vorbereitet und der Klebstoff vollkommen vor Feuchtigkeit geschützt wird.

Zwar befreit ein Vorgehen nach der Lehre der vorstehend diskutierten Studie von der Notwendigkeit, vor Ort, z.B. am Montageband, den eigentlichen Montagekleber aufzubringen. Andererseits tritt nachteilig in Erscheinung, dass die dergestalt vorbereitete Scheibe vor der Montage umständlich, üblicherweise unter Zwischenschaltung eines zusätzlichen Belüftungsvorganges der Verpackung, ausgepackt und das vergleichsweise voluminöse Verpackungsmaterial entsorgt werden muss. Ferner ist jener Studie bzw. Patentanmeldung keine Anweisung zu entnehmen, wie ein unbeabsichtigtes und sehr unerwünschtes Heraustreten der plastisch verformbaren Klebemasse über den Scheibenrand hinaus und/oder in den Sichtbereich der Scheibe hinein vermieden werden soll. Schliesslich fehlen auch Hinweise darauf, dass das Zentrieren bzw. Positionieren der Scheibe innerhalb des Rahmens oder der vom Montageflansch begrenzten Karosserieöffnung irgendwie unterstützt oder erleichtert wird.

Es ist die Aufgabe der vorliegenden Erfindung, eine Fahrzeugscheibe der im Oberbegriff des Patentanspruches 1 definierten Art so weiterzubilden, dass die Scheibe vor Ort, z.B. am Montageband, als einbaufertiges Bauteil zur Verfügung steht, namentlich unter Vermeidung der Notwendigkeit, unmittelbar vor der Montage einen Montagekleber aufbringen zu müssen, dass das Bereitstellen der angelieferten Scheibe rasch und problemlos, namentlich ohne Entsorgung von umfangreichen Verpackungsmaterial, erfolgen kann, und dass schliesslich eine Montagehilfe geboten wird, die das Einsetzen und Zentrieren der Scheibe in die bzw. bezüglich der die Scheibe aufnehmenden Öffnung erleichtert.

Gemäss der Erfindung wird diese Aufgabe bei einer Scheibe der im Oberbegriff des Patentanspruchs 1 definierten Art dadurch gelöst, dass der erste Kleberteilstrang im Querschnitt die Form einer Wanne mit ungleich hohen Seiten aufweist, wobei die der Scheibenkante abgewandte Wannenseite höher ist als die der Scheibenkante zugewandte Wannenseite, und wobei der erste Kleberteilstrang in seiner derart gebildeten Vertiefung mit einem zweiten, noch plastisch verformbaren und/oder aktivierbaren Kleberteilstrang aus einem mit dem ersten Kleberteilstrang chemisch kompatiblen Material versehen ist.

Beim Anliefern der derart vorbereiteten Scheibe braucht damit, je nach Art der verwendeten Klebersubstanz, unter Umständen lediglich das Material des zweiten Teilstranges, aktiviert zu werden, wobei das wannenartige Profil des ersten Kleberteilstranges einerseits ein Austreten des noch plastisch verformbaren oder plastisch gewordenen, aktivierten zweiten Kleberteilstranges an unerwünschte Bereiche der Scheibe und/oder des Rahmens bzw. der Karosserie verhindert und andererseits eine Referenz für das Einsetzen bzw. Zentrieren der Scheibe in einem Rahmen bzw. in einer durch Flansche begrenzten Öffnung, in die die Scheibe einzukleben ist, bildet.

Durch die Massnahme, dass der erste Kleberteilstrang im Querschnitt die Form einer Wanne mit ungleich hohen Seiten aufweist, wobei die der Scheibenkante abgewandte Wannenseite höher ist als die der Scheibenkante zugewandte Wannenseite, wird die angestrebte Zentrierfunktion des ersten Kleberteilstranges verbessert. Wenn ausserdem noch dafür gesorgt wird, dass die höhere Wannenseite mit einer gegen das Wanneninnere vorstehenden Rippe versehen ist, unter welche eine Kante des mit der Scheibe zu verklebenden Rahmens, Flansches oder dgl. einzugreifen bestimmt ist, ergibt sich bei zweckmässiger Dimensionierung eine formschlüssige Halterung der Scheibe im Rahmen, zwischen den Flanschen oder dgl., bis der zweite Kleberteilstrang ausgehärtet ist.

Um sicherzustellen, dass der zweite Kleberteilstrang auf einfachste Weise abgedeckt werden kann, sei es, um ihn vor mechanischer Beschädigung zu schützen, sei es, um ihn vor dem Einfluss von Feuchtigkeit, Licht etc. zu bewahren, ist es zweckmässig, wenn der zweite Kleberteilstrang vollständig innerhalb der wannenartigen Vertiefung des ersten Kleberteilstranges angeordnet ist.

Die Massnahmen, dass der zweite Kleberteilstrang im Querschnitt im wesentlichen dreieck- oder trapezförmige Gestalt besitzt, wobei die wannenöffnungsseitige Oberfläche gegen die höhere Wannenseite hin ansteigt, und dass der im Querschnitt dreieck- oder trapezförmige, zweite Kleberteilstrang mit zwei einen rechten Winkel einschliessenden Seiten am Wannenboden und an der höheren Wannenseite anliegt, tragen dazu bei, ein unerwünschtes Austreten der bei der Montage, nach der Aktivierung plastischen Masse des zweiten Kleberteilstranges in unerwünschte Bereiche der Scheibe und des Rahmens, Flansches oder dgl. zu verhindern.

Vorzugsweise ist der erste Kleberteilstrang zumindest teilweise mit einer abziehbaren Schutzhülle derart versehen, dass sie den zweiten Kleberteilstrang nicht berührt. Je nach physischer und chemischer Beschaffenheit des ersten und zweiten Teilstranges kann sich die Schutzhülle nur zwischen den beiden Oberkanten der Wannenseiten erstrecken und somit die wanneninnenseitige Vertiefung bedecken, oder sie kann den ersten Kleberteilstrang gas- und/oder feuchtigkeits- und/oder lichtdicht vollkommen verschliessen bzw. umschliessen.

Im Interesse einer leichten Entfernbarkeit unmittelbar vor der Aktivierung des zweiten Kleberteilstranges kann die Schutzhülle haftend mit dem ersten Kleberteilstrang verklebt sein.

Vorzugsweise kann die Schutzhülle eine gegebenenfalls metallbeschichtete Kunststoffolie, vorzugsweise eine Aluminium-Kunststoff-Verbundfolie sein, da solche Werkstoffe eine anerkannt gute Abdichtwirkung gegenüber Gasen, Feuchtigkeit und Licht aufweisen.

Als sehr gut geeignete Substanz für den ersten und/oder den zweiten Kleberteilstrang hat sich Polyurethanmaterial erwiesen. Der zweite Kleberteilstrang kann dabei aus einer oxidativ härtenden Klebersubstanz, aus einer feuchtigkeitshärtenden Klebersubstanz, aus einer durch Wärmeeinwirkung aktivierbaren Klebersubstanz, aus einer durch Wärmeeinwirkung aktivierbaren und beim Erkalten irreversibel ausreagierenden Klebersubstanz, aus einer langsam ausreagierenden Zweikomponenten-Klebersubstanz oder aus einer durch mechanische Einwirkung, z.B. durch Druck, Scherkräfte, Vibration oder dgl. aktivierbaren Klebersubstanz bestehen.

Die Erfindung betrifft ferner ein Verfahren zur Herstellung einer Fahrzeugscheibe der erfindungsgemässen Art, das sich durch folgende Verfahrensschritte auszeichnet:

- Aufextrudieren mit anschliessendem, haftendem Aushärten eines ersten, wannenförmig profilierten Kleberteilstranges entlang des Randes der Fahrzeugscheibe; und
- Einbringen eines zweiten Kleberteilstranges aus noch plastisch verformbaren und/oder aktivierbarem, mit dem Material des ersten Teilstranges chemisch kompatiblem Material in die wannenförmige Vertiefung des ersten Kleberteilstranges;

wobei das Aufbringen und Aushärten des ersten Kleberteilstranges und das Einbringen des zweiten Kleberteilstranges zeitlich und örtlich getrennt von der Montage der Fahrzeugscheibe erfolgt.

Wenn der erste Kleberteilstrang aus einem feuchtigkeitsreaktiven Polyurethanmaterial gebildet wird, ist es empfehlenswert, dass der erste Kleberteilstrang nach dem Aufextrudieren zur Beschleunigung der Aushärtung mit Hitze und/oder Wasserdampf behandelt wird. Des weiteren kann es in diesem Fall angebracht sein, dass vor dem Einbringen des zweiten Kleberteilstranges in die wannenförmige Vertiefung des ersten Kleberteilstranges derselbe abgekühlt und getrocknet wird, und dass das Einbringen des zweiten Kleberteilstranges unter Inertgas-Atmosphäre erfolgt.

Um mechanische Beschädigung oder ein vorzeitiges Reagieren des zweiten Kleberteilstranges zu vermeiden, wird die Massnahme empfohlen, dass der erste Kleberteilstrang unmittelbar nach dem Einbringen des zweiten Kleberteilstranges mittels einer vorzugsweise metallbeschichteten Kunststoffolie verschlossen wird.

Eine erfindungsgemäss ausgebildete Fahrzeugscheibe ist vor allem geeignet als montagefertiges Bauteil zum Einbau in Fahrzeugkarosserien durch Einkleben, ohne Verwendung eines zusätzlichen Montageklebers.

Im folgenden werden Ausführungsbeispiele der Erfindung, unter Bezugnahme auf die beiliegenden Zeichnungen, näher erläutert. In den Zeichnungen zeigen:

Fig. 1 einen teilsweise geschnittenen Ausschnitt aus einer Scheibe mit aufgebrachten, ersten und zweiten Kleberteilsträngen, ohne Schutzhülle;

Fig. 2 einen teilweise geschnittenen Ausschnitt aus einer Scheibe mit aufgebrachten, ersten und zweiten Kleberteilsträngen, mit einer ersten Ausführungsform einer Schutzhülle;

Fig. 3 einen teilweise geschnittenen Ausschnitt aus einer Scheibe mit aufgebrachten, ersten und zweiten Kleberteilsträngen, mit einer zweiten Ausführungsform einer Schutzhülle;

Fig. 4 einen teilweise geschnittenen Ausschnitt aus einer Scheibe, die in einem Flansch festgeklebt ist;

Fig. 5 einen Ausschnitt gemäss Fig. 2 mit modifiziertem, zweitem Kleberteilstrang; und

Fig. 6 einen Ausschnitt gemäss Fig. 4 mit dem modifizierten, zweiten Kleberteilstrang.

Bei der durch Verklebung zu montierenden Scheibe handelt es sich im Beispielsfall um eine Verbundglasscheibe 1, die eine erste Glasschicht 2 und eine zweite Glasschicht 3 aufweist, welche beiden Schichten mittels einer dünnen Kunststoffolie 4 miteinander verbunden sind. Entlang des Randes 5 der ersten Glasschicht 2, die nach der Montage der Scheibe 1 gegen Innen zu liegen kommt, ist eine Primerschicht 6 aufgebracht, die als Haftvermittler für einen ersten, generell mit 7 bezeichneten Kleberteilstrang dient. Dieser besitzt im Querschnitt im wesentlichen wannenförmige Gestalt, mit einer äusseren, benachbart zum Rand 5 der Glasschicht 2 liegenden Wand 8 und einer zweiten, inneren Wand 9. Letztere ist höher als die äussere Wand 8. Die beiden Wände 8 und 9 begrenzen eine langgezogene, wannenartige Vertiefung 10, die sich um die ganze Scheibe 1 herum erstreckt.

Die wannenartige Vertiefung 10 nimmt einen zweiten Kleberteilstrang 11 auf, der im wesentlichen dreieckförmigen (wie dargestellt) oder aber trapezförmigen Querschnitt besitzt. Die Anordnung ist dabei so getroffen, dass der zweite Kleberteilstrang 11 einerseits vollständig innerhalb des einseitig offenen, durch den ersten Kleberteilstrang begrenzten Hohlraumes 10 liegt, d.h. nicht über eine durch die beiden oberen Kanten der beiden Seitenwände 8 und 9 gelegte Ebene hinausragt, und andererseits so, dass die gegen die offene Seite des Hohlraumes 10 gewandte Oberfläche des zweiten Kleberteilstranges 11 gegen die höhere Wannenseite 9 hin ansteigt. Vorzugsweise soll auch beim Einbringen des zweiten Kleberteilstranges 11 in den Hohlraum 10 darauf geachtet werden, dass dieser Strang 11 nicht nur satt am Boden des Hohlraumes 10, sondern möglichst auch, zumindest teilweise, an der Innenfläche der höheren Wannenseite 9 anliegt, um die Gefahr zu verringern, dass sich das plastisch verformende Material des zweiten Kleberteilstranges 11 beim Montieren der Scheibe über die niedrigere Wannenseite 8 hinaus ergiesst.

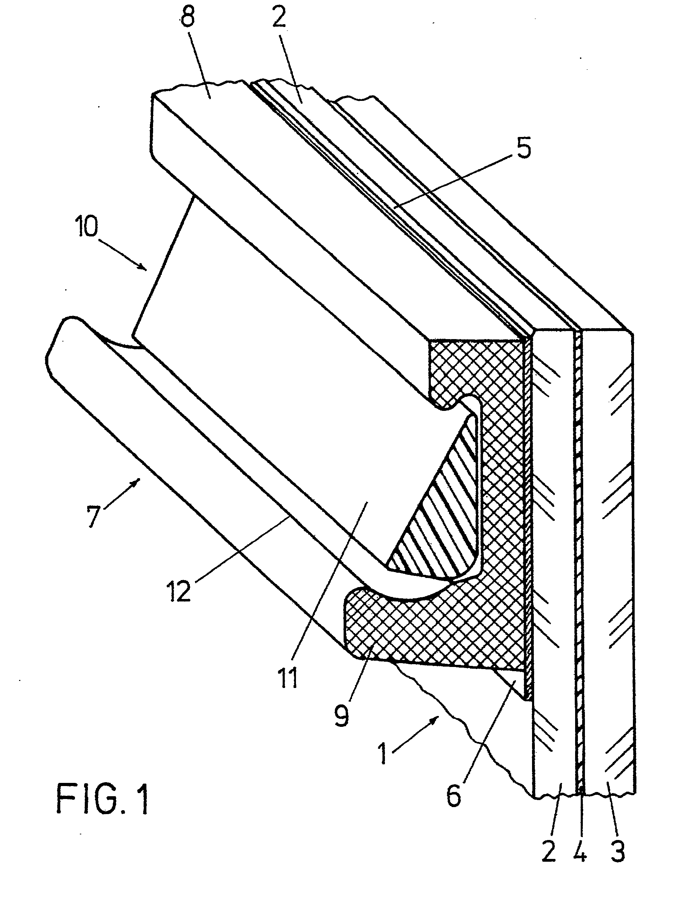

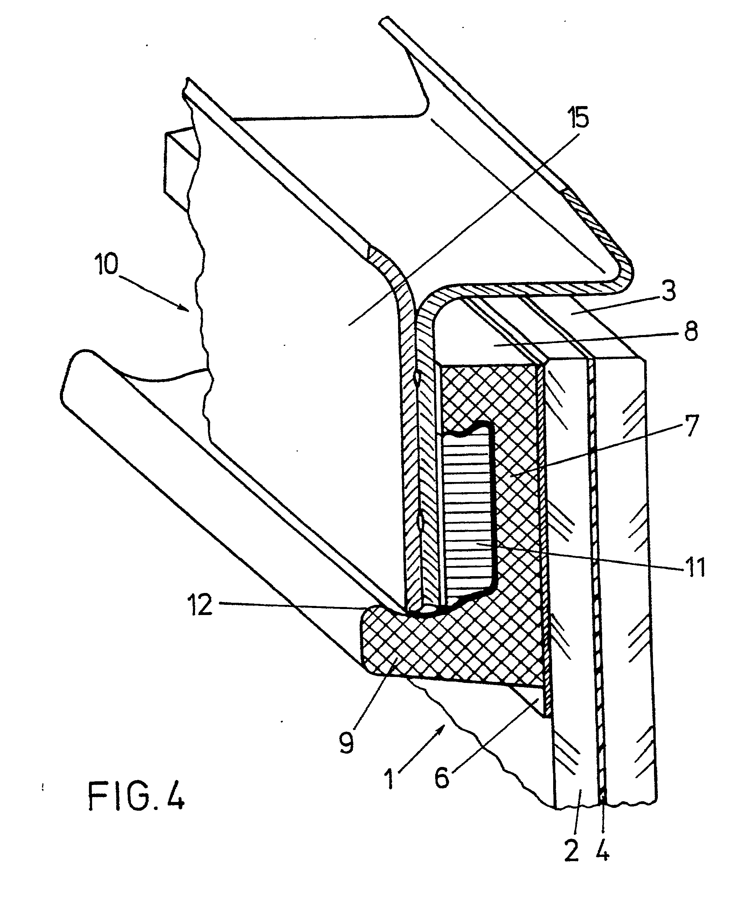

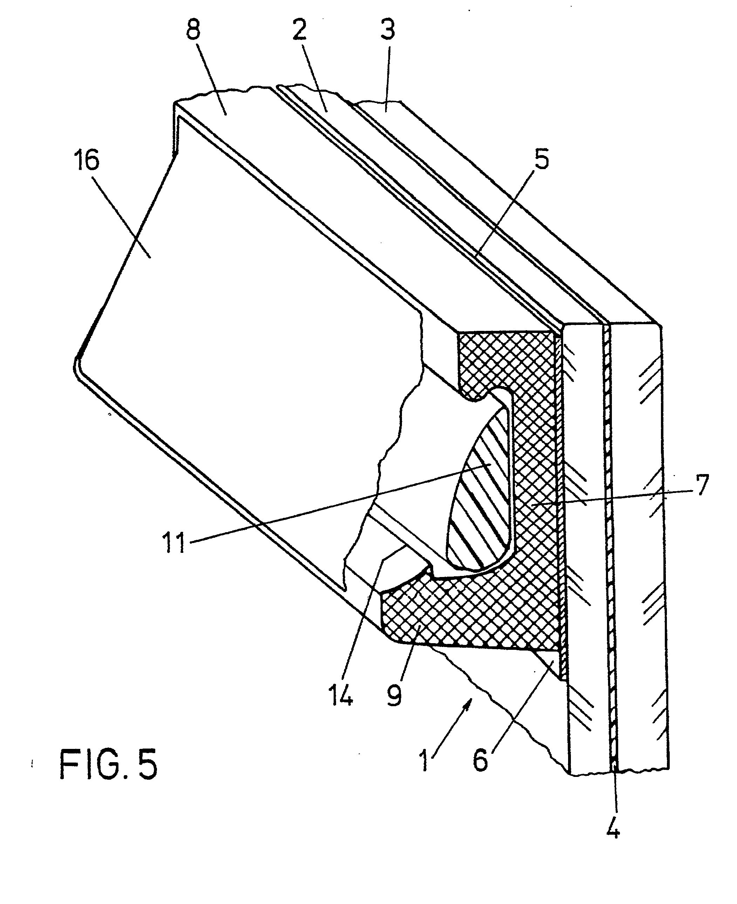

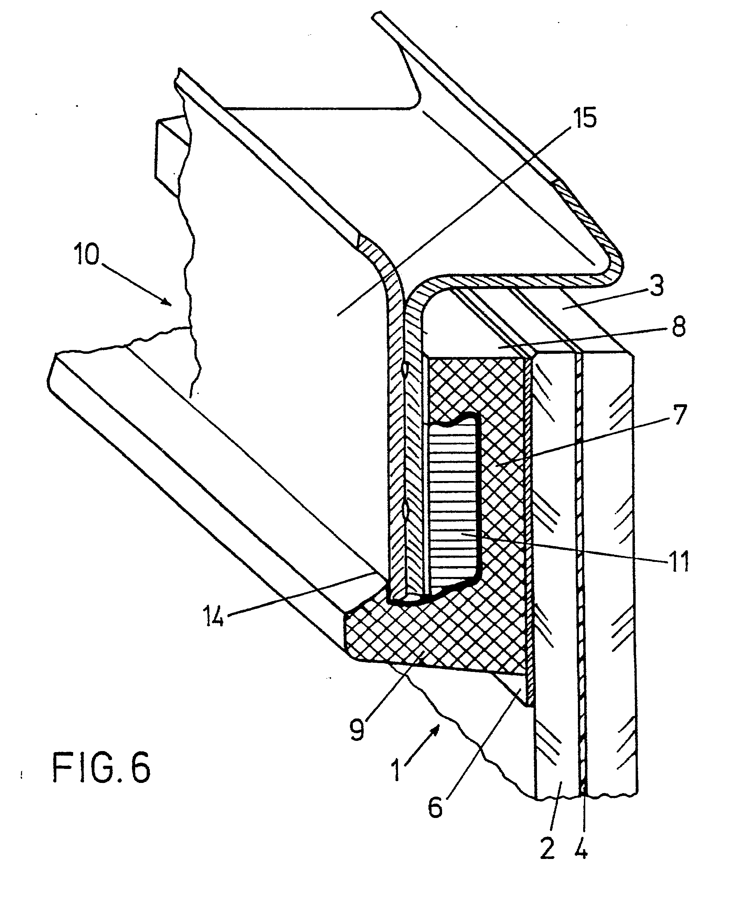

Die höhere Wannenseite 9 ist mit einer gegen das Wanneninnere 10 gerichteten Rippe 12 bzw. 14 versehen. Da das Material des ersten Kleberteilstranges elastisch ist, kann die Wannenseite 9 bzw. die Rippe 12 oder 14 zur Zentrierung und zum Festhalten der Scheibe 1 nach der Montage dienen, solange, bis der zweite Kleberteilstrang 11 ausgehärtet ist und tragende Funktion übernehmen kann. Die Rippe 12 eines ersten Ausführungsbeispiels (Fig. 1-4) ist entlang der oberen Randkante der höheren Wannenseite 9 ausgebildet und übergreift die Kante des Flansches 15 der (nicht dargestellten) Karosserie, wenn die Scheibe 1 eingesetzt ist (Fig. 4). Die Rippe 14 des zweiten Ausführungsbeispiels (Fig. 5 und 6) ist etwas unterhalb der oberen Randkante der höheren Wannenseite 9 angeordnet und erfüllt eine eigentliche Rastfunktion, wie aus der Darstellung in Fig. 6, wo die Scheibe 1 in den Flansch 15 eingesetzt ist, deutlich ersichtlich ist.

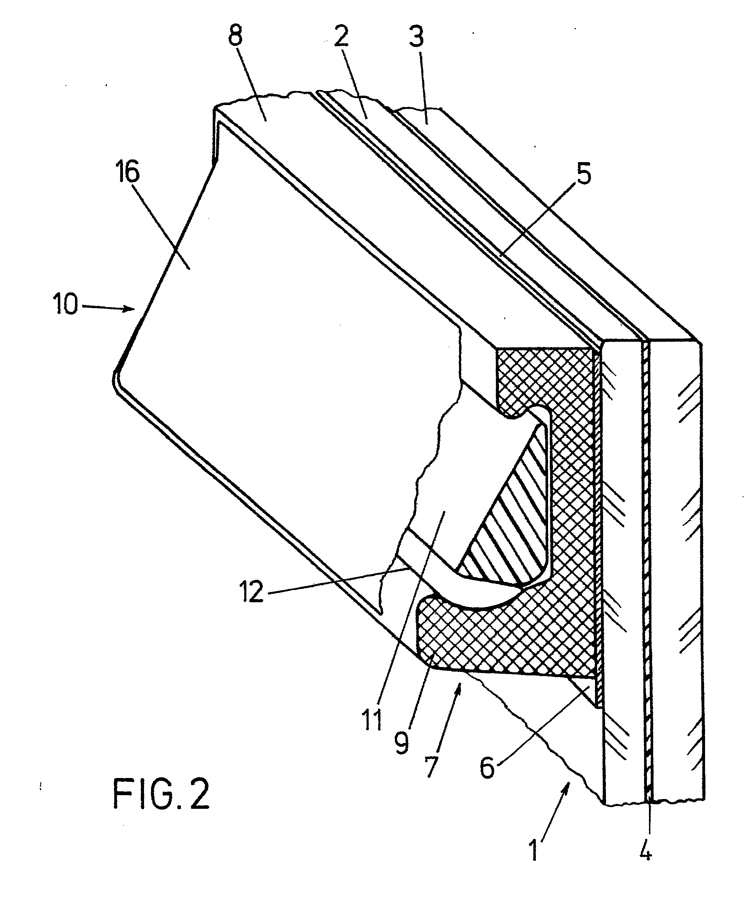

Bei der Fahrzeugscheibe nach der vorliegenden Erfindung kann der innerhalb des ersten Kleberteilstranges 7 liegende, zweite Kleberteilstrang 11 abgedeckt sein, um, je nach verwendetem Material, eine mechanische Beschädigung und Verschmutzung des zweiten Kleberteilstranges 11 zu verhindern und/oder um diesen vor Luftzutritt, vor Feuchtigkeitszutritt oder vor Licht bzw. UV-Strahlung zu schützen. Eine Möglichkeit, gemäss Darstellung in den Fig. 2 und 5, besteht darin, eine sich zwischen den Oberkanten der Wannenseiten 8 und 9 erstreckende Schutzfolie 16 anzubringen; da der zweite Kleberteilstrang 11 vollständig innerhalb des Hohlraumes 10 des ersten Kleberteilstranges 7 liegt, berührt die Schutzfolie 16 den Kleberteilstrang 11 nicht. Diese erste Möglichkeit ist dann ausreichend, wenn das Material des ersten Kleberteilstranges 7 selbst undurchlässig für Gas, Feuchtigkeit, Licht und dgl. ist.

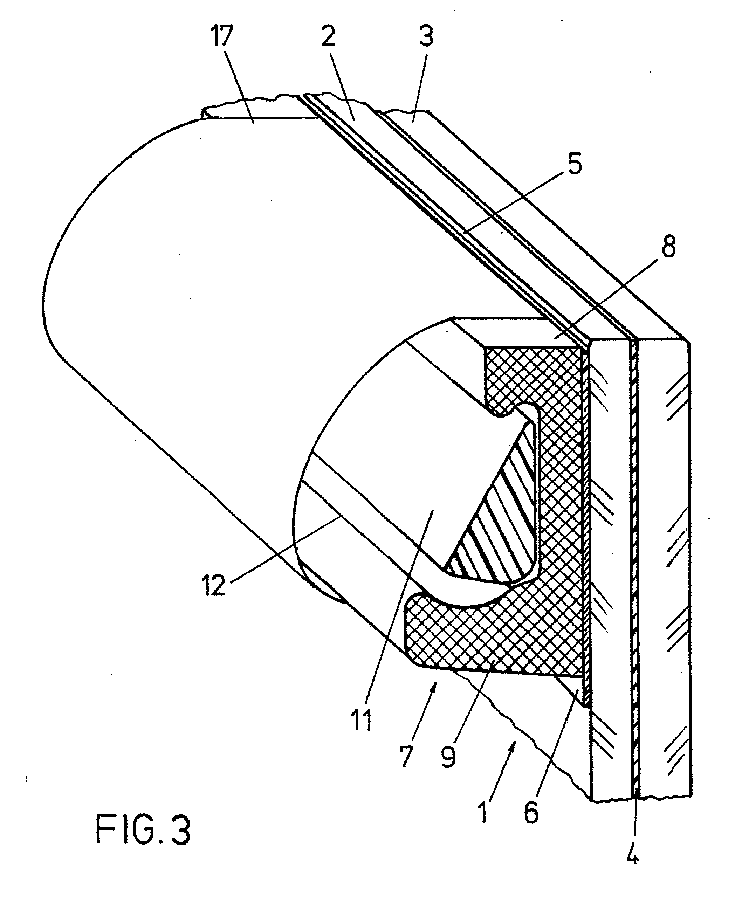

Sollte dies nicht der Fall sein, kann gemäss Fig. 3 eine Schutzhülle 17 vorgesehen werden, die den ersten Kleberteilstrang 7 und damit auch den zweiten Kleberteilstrang 11, ohne letzteren zu berühren, vollständig umgibt.

Als Material für die Schutzhüllen 16 bzw. 17 eignet sich vor allem eine gas- und feuchtigkeitsdichte, lichtundurchlässige Kunststoffolsie; bei erhöhten Ansprüchen wird zweckmässigerweise eine metallbeschichtete Kunststoffolie, z.B. eine Aluminium-Kunststoff-Verbundfolie, verwendet.

Damit die Abdeckung 16 bzw. 17 unmittelbar vor der Montage der Scheibe 1 leicht entfernt werden kann, wird diese zweckmässigerweise mittels eines Haftklebers gemäss bekanntem Stand der Technik am ersten Kleberteilstrang 7 befestigt.

Die Herstellung der erfindungsgemässen Fahrzeugscheibe geschieht wie folgt:

Auf die gereinigte und gegebenenfalls mit einer Licht- und UV-undurchlässigen Randschicht versehene Scheibe 1 wird zunächst die Primerschicht 6 aufgetragen und getrocknet. Danach wird mit einem bekannten Verfahren, das hier nicht näher diskutiert werden muss, der erste Kleberteilstrang 7 in der erwünschten Profilierung aufextrudiert. Anschliessend wird der erste Kleberteilstrang 7 ausgehärtet bzw. dessen Ausreaktion wird abgewartet. Dieser Vorgang kann dadurch unterstützt werden, dass nach dem Aufextrudieren eine Behandlung mit Wärme und/oder Wasserdampf erfolgt, je nach verwendetem Material für den ersten Kleberteilstrang 7.

Nun kann der erste Kleberteilstrang 7, falls erforderlich, abgekühlt und/oder getrocknet werden, um optimale Verhältnisse für das anschliessende Einbringen des zweiten Kleberteilstranges 11 zu schaffen. Dieser besteht, wie anschliessend noch erläutert werden wird, aus einem mit dem Material des ersten Kleberteilstranges 7 chemisch kompatiblen, nicht-reagierten, jedoch nachträglich aktivierbaren Material. Gegebenenfalls muss das Einbringen des zweiten Kleberteilstranges 11, wie auch das schliessliche Anbringen der Schutzhülle 16 oder 17, in einer inerten Schutzgasatmosphäre erfolgen, um eine vorzeitige Aktivierung des Materials des zweiten Kleberteilstranges 11 zu verhindern.

All diese Vorgänge finden zeitlich und örtlich getrennt von der eigentlichen Montage der Scheibe statt. Mit anderen Worten, die Scheibe kann montagefertig als autonomes Bauteil in einer optimierten Umgebung, mit ideal geeignetem Zeitablauf und unter besten Bedingungen soweit vorbereitet werden, dass unmittelbar vor der Montage lediglich noch gegebenenfalls die Schutzhülle 16 bzw. 17 entfernt und der zweite Kleberteilstrang 11 aktiviert werden muss. Die Verwendung eines eigentlichen Montageklebers, insbesondere das zeit- und arbeitsintensive Auftragen desselben, entfällt.

Als Material zur Ausbildung des ersten Kleberteilstranges 7 eignet sich z.B. ein Polyurethansystem, und zwar sowohl ein feuchtigkeitshärtendes Einkomponentensystem als auch ein chemisch ausreagierendes Zweikomponentensystem. Diese Materialien härten, im Fall des Einkomponentensystems unter Zuhilfenahme einer Wasserdampfbehandlung, relativ schnell aus und bleiben in ausreagiertem Zustand elastisch.

Für den zweiten Kleberteilstrang 11 kommen verschiedene Materialien in Betracht:

a. Oxidativ härtende Klebersubstanzen

Diese Substanzen müssen unter Luft- bzw. Sauerstoffabschluss gelagert werden, erfordern also zwingend eine Schutzfolie 16 (Fig. 2 und 5), noch besser eine Schutzhülle 17 gemäss Fig. 3, da die meisten Materialien, die für die Ausbildung des ersten Kleberteilstranges 7 in Frage kommen, bis zu einem gewissen Grad luftdurchlässig sind. Als Bei spiel für solche Substanzen kann genannt werden: Ein Gemisch aus Polyurethan-Präpolymer mit endständigen Mercaptan-Gruppen und einem Oxydationsbeschleuniger, z.B. gemäss EP-PS 0 066 167.

b. Feuchtigkeitsreaktive Klebersubstanzen

Hier gelten sinngemäss die unter a. angeführten Bemerkungen. Als Beispiele für solche Substanzen können genannt werden:
- Polymercapto-Verbindungen + Erdalkaliperoxid im wasserfreien Zustand, z.B. gemäss US-A 3 912 696 oder US-A 3 225 017
- Polyurethan-Präpolymer mit endständigen Silangruppen, z.B. gemäss US-A 3 632 557 oder US-A 4 222 925
- Polyurethan-Präpolymer mit endständigen Isocyanat-Gruppen, z.B. gemäss US-A 3 779 794 oder EP-A 0 040 469
- Feuchtigkeitshärtende Silikonmassen, z.B. gemäss DE-C 1 255 924 oder GB-A 992 366

- Gemisch aus einem flexiblen Epoxidharz und einem polyfunktionellen Ketimin
- Gemisch aus einem flexiblen Epoxidharz und einem mit polyfunktionellem Amin beladenen Molekularsieb.

## c. Thermoplastische Klebersubstanzen

Diese als "Hotmelts" bezeichneten Klebersubstanzen sind bei Raumtemperatur fest und werden bei Erwärmung auf eine bestimmte Temperatur pastös bzw. flüssig. Nach dem Abkühlen gehen sie wieder in festen Zustand über. Dadurch, dass der erste Kleberteilstrang 7 ein schlechter Wärmeleiter ist, wird die Verwendbarkeit solcher Klebersubstanzen begünstigt bzw. überhaupt erst ermöglicht. Der aktivierte (d.h. erwärmte) zweite Kleberteilstrang 11 ist nämlich von der Scheibe 1 thermisch isoliert und bleibt dadurch während genügend langer Zeit verarbeitungsfähig. Eine Abdeckung mittels Folie 16 oder Hülle 17 ist nicht unbedingt erforderlich, ausser eventuell zum Schutz gegen Verschmutzung oder mechanische Beschädigung. Als Beispiele für solche Substanzen können thermoplastische Polyurethan-Kautschuke genannt werden.

## d. Wärmehärtende Klebersubstanzen

Im wesentlichen gelten hier die gleichen Bemerkungen wie unter c. Sie unterscheiden sich aber dadurch dass sie bei Überschreiten einer kritischen Temperatur und anschliessender Abkühlung irreversibel in den festen Zustand übergehen. In der Praxis wird die Klebersubstanz zur Ausbildung des zweiten Kleberteilstranges auf eine erste Temperatur $T_1$ erwärmt, die unterhalb der kritischen Temperatur $T_2$ liegt, um ein Aufextrudieren auf den ersten Kleberteilstrang zu ermöglichen. Bei der Montage der Scheibe wird dann der zweite Kleberteilstrang über die kritische Temperatur $T_2$ hinaus erwärmt und wieder abgekühlt; ein nachfolgendes, weiteres Erwärmen hat dann keine Zustandsänderung mehr zur Folge. Als Beispiele für solche Substanzen können genannt werden: Gemische aus einem Epoxidharz und einem $BF_3$-Amin-Komplex sowie hitzeaktivierbare Polyurethan-Klebersubstanzen.

## e. Langsam reagierende Zweikomponentensysteme

Durch entsprechende Wahl der chemischen Zusammensetzung können diese Systeme auf eine geeignete Offenzeit eingestellt werden. Sie können in all jenen Fällen angewendet werden, wenn eine längere Lagerung der Scheibe mit Sicherheit ausgeschlossen ist. Eine Abdeckung mit Folie 16 oder Hülle 17 ist, ausser zu mechanischem Schutz, nicht unbedingt erforderlich. Als Beispiel für solche Substanzen kann genannt werden: Gemische aus OH- und NCO-Gruppen enthaltenden Polyurethan-Präpolymeren.

In jedem Fall ist jedoch zu beachten, dass das für den zweiten Kleberteilstrang 11 gewählte Material chemisch kompatibel ist zum Material des ersten, voraufgebrachten und ausreagierten Kleberteilstrang 7, d.h., dass der zweite Kleberteilstrang 11 nach dessen Aktivierung nicht nur am Rahmen, Flansch oder dgl., in den die Scheibe eingesetzt werden soll, sondern auch am ersten Kleberteilstrang 7 einwandfrei haftet.

In der nachfolgenden Tabelle sind beispielsweise die wichtigsten Eigenschaften von einigen in Frage kommenden Materialien für den zweiten Kleberteilstrang angegeben. Es versteht sich, dass die Angaben in der Tabelle nur als grobe Richtwerte bzw. als Anhaltspunkte zu verstehen sind.

7

| SUBSTANZ | LAGERZEIT | AKTIVIERUNG | OFFENZEIT |
|----------|-----------|-------------|-----------|
| a. | 2 - 6 Mte. | $O_2$-Kontakt nach Entfernen der Schutzfolie | 10 - 30 min |
| b. | 30 min bis 2 Wochen | Luftfeuchtigkeit | 10 - 30 min |
| c. | 6 - 12 Mte. | Wärme | 5 s - 1 min |
| d. | 6 - 12 Mte. | Wärme | 20 s - 3 min |
| e. | 30 - 180 min | ---- | 30 - 240 min |

**Patentansprüche**

1. Fahrzeugscheibe (1) für die Direktverglasung durch Einkleben in einen Rahmen, Flansch (15) oder dgl., welche entlang ihres Randes (5) einen ersten, gegebenenfalls über einer Primerschicht (6) aufgebrachten, profilierten Kleberteilstrang (7) aufweist, der gegebenenfalls elastisch, nicht jedoch plastisch verformbar ist, dadurch gekennzeichnet, dass zur Bildung einer vorgefertigten Fahrzeugscheibe der erste Kleberteilstrang (7) im Querschnitt die Form einer Wanne mit ungleich hohen Seiten (8, 9) aufweist, wobei die der Scheibenkante (5) abgewandte Wannenseite (9) höher ist als die der Scheibenkante (5) zugewandte Wannenseite (8), und wobei der erste Kleberteilstrang (7) in seiner derart gebildeten Vertiefung (10) mit einem zweiten, noch plastisch verformbaren und/oder aktivierbaren Kleberteilstrang (11) aus einem mit dem ersten Kleberteilstrang (7) chemisch kompatiblen Material versehen ist.

2. Fahrzeugscheibe nach Patentanspruch 1, dadurch gekennzeichnet, dass die höhere Wannenseite (9) mit einer gegen das Wanneninnere (10) vorstehenden Rippe (12; 14) versehen ist, unter welche eine Kante des mit der Scheibe (1) zu verklebenden Rahmens, Flansches (15) oder dgl. einzugreifen bestimmt ist.

3. Fahrzeugscheibe nach einem der vorangehenden Patentansprüche, dadurch gekennzeichnet, dass der zweite Kleberteilstrang (11) vollständig innerhalb der wannenartigen Vertiefung (10) des ersten Kleberteilstranges (7) angeordnet ist.

4. Fahrzeugscheibe nach Patentanspruch 3, dadurch gekennzeichnet, dass der zweite Kleberteilstrang (11) im Querschnitt im wesentlichen dreieck- oder trapezförmige Gestalt besitzt, wobei die wannenöffnungsseitige Oberfläche des zweiten Kleberteilstranges (11) gegen die höhere Wannenseite (9) hin ansteigt.

5. Fahrzeugscheibe nach Patentanspruch 4, dadurch gekennzeichnet, dass der im Querschnitt dreieck- oder trapezförmige, zweite Kleberteilstrang (11) mit zwei einen rechten Winkel einschliessenden Seiten am Wannenboden und an der höheren Wannenseite (9) anliegt.

6. Fahrzeugscheibe nach einem der vorangehenden Patentansprüche, dadurch gekennzeichnet, dass der erste Kleberteilstrang (7) zumindest teilweise mit einer abziehbaren Schutzhülle (16; 17) derart versehen ist, dass sie den zweiten Kleberteilstrang (11) nicht berührt.

7. Fahrzeugscheibe nach Patentanspruch 6, dadurch gekennzeichnet, dass sich die Schutzhülle als Folie (16) zwischen den beiden Oberkanten der Wannenseiten (8, 9) erstreckt und somit die wanneninnenseitige Vertiefung (10) bedeckt.

8. Fahrzeugscheibe nach Patentanspruch 6, dadurch gekennzeichnet, dass die Schutzhülle (17) den gesamten ersten Kleberteilstrang (7) umschliesst.

9. Fahrzeugscheibe nach einem der Patentansprüche 6 bis 8, dadurch gekennzeichnet, dass die Schutzhülle (16; 17) den ersten Kleberteilstrang (7) gas- und/oder feuchtigkeits- und/oder lichtdicht verschliesst bzw. umschliesst.

10. Fahrzeugscheibe nach einem der Patentansprüche 6 bis 9, dadurch gekennzeichnet, dass die Schutzhülle (16; 17) haftend mit dem ersten Kleberteilstrang (7) verklebt ist.

11. Fahrzeugscheibe nach einem der Patentansprüche 6 bis 10, dadurch gekennzeichnet, dass die Schutzhülle (16; 17) eine gegebenenfalls metallbeschichtete Kunststoffolie ist.

12. Fahrzeugscheibe nach einem der Patentansprüche 6 bis 10, dadurch gekennzeichnet, dass die Schutzhülle (16; 17) eine Aluminium-Kunststoff-Verbundfolie ist.

13. Fahrzeugscheibe nach einem der vorangehenden Patentansprüche, dadurch gekennzeichnet, dass der erste (7) und/oder der zweite (11) Kleberteilstrang aus Polyurethanmaterial bestehen bzw. besteht.

14. Fahrzeugscheibe nach einem der vorangehenden Patentansprüche, dadurch gekennzeichnet, dass der zweite Kleberteilstrang (11) aus einer oxidativ härtenden Klebersubstanz besteht.

15. Fahrzeugscheibe nach einem der Patentansprüche 1 bis 13, dadurch gekennzeichnet, dass der zweite Kleberteilstrang (11) aus einer feuchtigkeitshärtenden Klebersubstanz besteht.

16. Fahrzeugscheibe nach einem der Patentansprüche 1 bis 13, dadurch gekennzeichnet, dass der zweite Kleberteilstrang (11) aus einer durch Wärmeeinwirkung aktivierbaren Klebersubstanz besteht.

17. Fahrzeugscheibe nach einem der Patentansprüche 1 bis 13, dadurch gekennzeichnet, dass der zweite Kleberteilstrang (11) aus einer durch Wärmeeinwirkung aktivierbaren und irreversibel ausreagierenden Klebersubstanz besteht.

18. Fahrzeugscheibe nach einem der Patentansprüche 1 bis 13, dadurch gekennzeichnet, dass der zweite Kleberteilstrang (11) aus einer langsam ausreagierenden Zweikomponenten-Klebersubstanz besteht.

19. Verfahren zur Herstellung einer vorgefertigten Fahrzeugscheibe nach einem oder mehreren der Patentansprüche 1 bis 18, gekennzeichnet durch
- das Aufextrudieren mit anschliessendem, haftendem Aushärten eines ersten, wannenförmig profilierten Kleberteilstranges (7) entlang des Randes (5) der Fahrzeugscheibe (1); und
- das Einbringen eines zweiten Kleberteilstranges (11) aus plastisch verformbaren und/oder aktivierbarem, mit dem Material des ersten Teilstranges (7) chemisch kompatiblem Material in die wannenförmige Vertiefung (10) des ersten Kleberteilstranges (7);
wobei das Aufbringen und Aushärten des ersten Kleberteilstranges (7) und das Einbringen des zweiten Kleberteilstranges (11) zeitlich und örtlich getrennt von der Montage der Fahrzeugscheibe (1) erfolgt.

20. Verfahren nach Patentanspruch 19, dadurch gekennzeichnet, dass der erste Kleberteilstrang (7) vor dem Aufextrudieren des zweiten Kleberteilstranges (11) zur Beschleunigung der Aushärtung mit Hitze und/oder Wasserdampf behandelt wird.

21. Verfahren nach Patentanspruch 19 oder 20, dadurch gekennzeichnet, dass die mit dem zweiten Kleberteilstrang (11) versehene Wanne mit einer abziehbaren Schutzhülle (16; 17) versehen wird.

22. Verfahren nach Patentanspruch 21, dadurch gekennzeichnet, dass die Schutzhülle derart aufgebracht wird, dass diese den zweiten Kleberteilstrang (11) nicht berührt.

23. Verfahren nach Patentanspruch 19 oder 20, dadurch gekennzeichnet, dass der erste Kleberteilstrang (7) unmittelbar nach dem Einbringen des zweiten Kleberteilstranges (11) mittels einer vorzugsweise metallbeschichteten Kunststoffolie (16; 17) verschlossen wird.

24. Verwendung der vorgefertigten Fahrzeugscheibe nach einem oder mehreren der Patentansprüche 1 bis 18 als montagefertiges Bauteil zum Einbau in Fahrzeugkarosserien durch Einkleben, ohne Verwendung eines zusätzlichen Montageklebers.

## Revendications

1. Vitre (1) de véhicule à fixation directe par collage dans un cadre, une bride (15) ou analogue, qui comporte le long de son bord (5) un premier boudin partiel de colle (7) profilé et éventuellement appliqué sur une couche de fond (6), lequel est éventuellement élastique mais ne peut pas être déformé plastiquement, caractérisée en ce que, pour réaliser une vitre de véhicule préfabriquée, le premier boudin partiel de colle (7) présente une section en forme de cuvette ayant des côtés (8, 9) de hauteur différente, le côté de cuvette (9) opposée à l'arête (5) de la vitre étant plus haut que le côté de cuvette (8) tourné vers l'arête (5) de la vitre et le premier boudin partiel de colle (7) étant pourvu dans son renfoncement (10) ainsi réalisé d'un deuxième boudin partiel de colle (11) qui peut encore être déformé plastiquement et/ou activé et constitué d'un matériau chimiquement compatible avec le premier boudin partiel de colle (7).

2. Vitre de véhicule selon la revendication 1, caractérisée en ce que le côté de cuvette (9) le plus élevé est pourvu d'une nervure (12; 14) en saillie par rapport à l'intérieur de cuvette (10), nervure sous laquelle doit s'engager un bord du cadre, de la bride (15) ou analogue destiné à être collé à la vitre (1).

3. Vitre de véhicule selon l'une des revendications précédentes, caractérisée en ce que le deuxième boudin partiel de colle (11) est entièrement disposé à l'intérieur du renfoncement (10) en forme de cuvette du premier boudin partiel de colle (7).

4. Vitre de véhicule selon la revendications 3, caractérisée en ce que le deuxième boudin partiel de colle (11) présente une section de forme essentiellement triangulaire ou trapézoïdale, la face supérieure du deuxième boudin partiel de colle (11), située du côté ouverture de la cuvette, remontant vers le côté de cuvette (9) le plus élevé.

5. Vitre de véhicule selon la revendication 4, caractérisée en ce que le deuxième boudin partiel de colle (11), présentant une section de forme triangulaire ou trapézoïdale, s'applique, par deux côtés formant un angle droit, contre le fond de cuvette et contre le côté de cuvette (9) le plus élevé.

6. Vitre de véhicule selon l'une des revendications précédentes, caractérisée en ce que le premier boudin partiel de colle (7) est pourvu, au moins partiellement, d'une enveloppe de protection (16; 17) pouvant être arrachée, de manière telle qu'elle ne soit pas en contact avec le deuxième boudin partiel de colle (11).

7. Vitre de véhicule selon la revendication 6, caractérisée en ce que l'enveloppe de protection, réalisée en tant que feuille (16), s'étend entre les deux bords supérieurs des côtés de cuvette (8, 9) et recouvre ainsi le renfoncement (10) du côté intérieur de cuvette.

8. Vitre de véhicule selon la revendication 6, caractérisée en ce que l'enveloppe de protection (17) entoure tout le premier boudin partiel de colle (7).

9. Vitre de véhicule selon l'une des revendications 6 à 8, caractérisée en ce que l'enveloppe de protection (16; 17) enferme ou entoure le premier boudin partiel de colle (7) de manière étanche au gaz et/ou à l'humidité et/ou à la lumière.

10. Vitre de véhicule selon l'une des revendications 6 à 9, caractérisée en ce que l'enveloppe de protection (16; 17) est collée au premier boudin partiel de colle (7) par adhérence.

11. Vitre de véhicule selon l'une des revendications 6 à 10, caractérisée en ce que l'enveloppe de protection (16; 17) est une feuille de matière plastique éventuellement métallisée.

12. Vitre de véhicule selon l'une des revendications 6 à 10, caractérisée en ce que l'enveloppe de protection (16; 17) est une feuille composite d'aluminium et de matière plastique.

13. Vitre de véhicule selon l'une des revendications précédentes, caractérisée en ce que le premier (7) et/ou le deuxième (11) boudin partiel de colle est/sont constitué(s) d'un matériau à base de polyuréthane.

14. Vitre de véhicule selon l'une des revendications précédentes, caractérisée en ce que le deuxième boudin partiel de colle (11) est constitué d'une substance collante durcissant par oxydation.

15. Vitre de véhicule selon l'une des revendications 1 à 13, caractérisée en ce que le deuxième boudin partiel de colle (11) est constitué d'une substance collante durcissant sous l'action de l'humidité.

16. Vitre de véhicule selon l'une des revendications 1 à 13, caractérisée en ce que le deuxième boudin partiel de colle (11) est constitué d'une substance collante pouvant être activée sous l'action de la chaleur.

17. Vitre de véhicule selon l'une des revendications 1 à 13, caractérisée en ce que le deuxième boudin partiel de colle (11) est constitué d'une substance collante pouvant être activée sous l'action de la chaleur et réagissant de manière irréversible.

18. Vitre de véhicule selon l'une des revendications 1 à 13, caractérisée en ce que le deuxième boudin partiel de colle (11) est constitué d'une substance collante à deux composants réagissant lentement.

19. Procédé de fabrication d'une vitre de véhicule préfabriquée selon l'une ou plusieurs des revendications 1 à 18, caractérisé par:
– l'application par extrusion, puis durcissement adhésif d'un premier boudin partiel de colle (7), profilé en forme de cuvette, le long du bord (5) de la vitre (1) de véhicule et
– l'application d'un deuxième boudin partiel de colle (11) dans le renfoncement (10) en forme de cuvette du premier boudin partiel de colle (7), ledit deuxième boudin partiel de colle (11) étant constitué d'un matériau pouvant encore être déformé plastiquement et/ou activé et étant chimiquement compatible avec le matériau du premier boudin partiel de colle (7),
l'application et le durcissement du premier boudin partiel de colle (7) et l'insertion du deuxième boudin partiel de colle (11) étant réalisés à un moment et dans un lieu différents de ceux où s'effectue le montage de la vitre (1) de véhicule.

20. Procédé selon la revendication 19, caractérisé en ce que le premier boudin partiel de colle (7) subit un traitement au moyen de chaleur et/ou de vapeur d'eau pour accélérer son durcissement avant l'application par extrusion du deuxième boudin partiel de colle (11).

21. Procédé selon la revendication 19 ou 20, caractérisé en ce que la cuvette pourvue du deuxième boudin partiel de colle (11) est revêtue d'une enveloppe de protection (16; 17) pouvant être retirée.

22. Procédé selon la revendication 21, caractérisé en ce que l'enveloppe de protection est appliquée de manière à ce qu'elle ne soit pas en contact avec le deuxième boudin partiel de colle (11).

23. Procédé selon la revendication 19 ou 20, caractérisé en ce que le premier boudin partiel de colle (7) est isolé au moyen d'une feuille (16; 17) en matière plastique, de préférence métallisée, aussitôt après l'insertion du deuxième boudin partiel de colle (11).

24. Utilisation de la vitre de véhicule préfabriquée selon l'une ou plusieurs des revendications 1 à 18 comme élément prêt au montage, destiné à être mis en place dans des carrosseries de véhicules par collage sans utiliser de colle de montage supplémentaire.

**Claims**

1. Vehicle window (1) for direct glazing by way of glueing it into a frame, flange (15) or the like, which window has along its edge (5) a first profiled partial section of adhesive (7), if appropriate applied on a coat of primer (6), which may be elastic but not plastically mouldable, characterized in that for making a prefabricated vehicle window, the first partial section of adhesive (7) has cross-sectionally the shape of a tub having flanks of unequal height (8, 9), in which respect the tub flank (9) facing away from the window edge (5) is higher than the tub flank (8) facing the window edge (5), and whereby the first partial section of adhesive (7) is provided in its thus formed recess (10) with a second, still plastically mouldable and/or activatable partial section of adhesive (11) of a material which is chemically compatible with the first partial section of adhesive (7).

2. Vehicle window according to claim 1, characterised in that the higher tub flank (9) is provided with a rib (12; 14) protruding towards the tub inside (10), under which rib engages an edge of the frame or flange (15) or the like to be glued together with the window (1).

3. Vehicle window according to one of the above patent claims, characterised in that the second partial section of adhesive (11) is arranged completely within the tubshaped recess (10) of the first partial section of adhesive (7).

4. Vehicle window according to patent claim 3, characterised in that the second partial section of adhesive (11) is cross-sectionally substantially triangular or trapezoidal in shape with the surface of the second partial section of adhesive (11), which is facing the open side of the tub, rising against the higher tub side (9).

5. Vehicle window according to patent claim 4, characterised in that the cross-sectionally triangular or trapezoidal second partial section of adhesive (11) abuts with two flanks which include a right angle, against the tub bottom and against the higher tub flank (9).

6. Vehicle window according to one of the above patent claims, characterised in that the first partial section of adhesive (7) is at least partially provided with a removable protective cover (16; 17) in such a manner that it does not touch the second partial section of adhesive (11).

7. Vehicle window according to patent claim 6, characterised in that the protective cover is a foil (16) extending between the two upper edges of the tub flanks (8, 9), thus covering the tub inside recess (10).

8. Vehicle window according to patent claim 6, characterised in that the protective cover (17) encloses the entire first partial section of adhesive (7).

9. Vehicle window according to one of the patent claims 6 to 8, characterised in that the protective cover (16; 17) seals or encloses the first partial section of adhesive (7) in a gas- and/or humidity- and/or lightproof manner.

10. Vehicle window according to one of the patent claims 6 to 9, characterised in that the protective cover (16; 17) is adhesively glued to the first partial section of adhesive (7).

11. Vehicle window according to one of patent claims 6 to 10, characterised in that the protective cover (16; 17) is a synthetic-material foil, which if appropriate, is metal-coated.

12. Vehicle window according to one of the patent claims 6 to 10, characterised in that the protective cover (16; 17) is an aluminium/plastic compound foil.

13. Vehicle window according to one of the above patent claims, characterised in that the first (7) and/or the second (11) partial section of adhesive is/are composed of polyurethane material.

14. Vehicle window according to one of the above patent claims, characterised in that the second partial section of adhesive (11) is composed of an oxydatively curing adhesive substance.

15. Vehicle window according to one of the patent claims 1 to 13, characterised in that the second partial section of adhesive (11) is composed of a moisture-curing adhesive substance.

16. Vehicle window according to one of the patent claims 1 to 13, characterised in that the second partial section of adhesive (11) is composed of a heat-activatable adhesive substance.

17. Vehicle window according to one of the patent claims 1 to 13, characterised in that the second partial section of adhesive (11) is composed of an adhesive substance which is activatable and irreversibly cured under the effect of heat.

18. Vehicle window according to one of the patent claims 1 to 13, characterised in that the second partial section of adhesive (11) is composed of a slow-curing two-component adhesive substance.

19. Method for the manufacture of a prefabricated vehicle window according to one or several of the patent claims 1 to 18, characterised by the sleps of
– extruding a first, tubshaped profiled partial section of adhesive (7) onto the vehicle window (1) along its edge and subsequently curing it: and
– placing a second partial section of adhesive (11) of a plastically mouldable and/or activatable material which is chemically compatible with the material of the first partial section of adhesive (7) into the tubshaped recess (10) of the first partial section of adhesive (7);
the application and curing of the first partial section of adhesive (7) and the fitting of the second partial section of adhesive (11) being timewise and spatially separate from the assembling of the vehicle window (1).

20. Method according to patent claim 19, characterised in that the first partial section of adhesive (7) is treated with heat and/or water vapour prior to the extrusion of the second partial section of adhesive (11) in order to expedite curing.

21. Method according to patent claim 19 or 20, characterised in that the tub fitted with the second partial section of adhesive (11) is provided with a removable protective cover (16; 17).

22. Method according to patent claim 21, characterised in that the protective cover is applied in such a manner that it does not touch the second partial section of adhesive (11).

23. Method according to patent claim 19 or 20, characterised in that the first partial section of adhesive (7) is sealed immediately after fitting the second partial section of adhesive (11) by means of a synthetic-material foil (16; 17) which is preferably metal-coated.

24. Use of the prefabricated vehicle window according to one or several of the patent claims 1 to 18 as a ready-to-fit construction unit for assembly in vehicle bodies by way of glueing it without the use of an additional assembling adhesive.

FIG. 1

FIG.2

FIG.3

FIG.4

FIG. 5

FIG.6